(19) **Europäisches Patentamt**

**European Patent Office**

**Office européen des brevets**

(11) **EP 4 687 304 A1**

(12) **EUROPEAN PATENT APPLICATION**

(43) Date of publication:
04.02.2026 Bulletin 2026/06

(21) Application number: 25180122.1

(22) Date of filing: 02.06.2025

(51) International Patent Classification (IPC):
*H04B 7/0404* (2017.01)    *H04B 7/06* (2006.01)
*H04B 7/08* (2006.01)

(52) Cooperative Patent Classification (CPC):
**H04B 7/0404; H04B 7/0608; H04B 7/0802**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **31.07.2024 GB 202411225**

(71) Applicant: **Nokia Technologies Oy
02610 Espoo (FI)**

(72) Inventors:
• **NIELSEN, Kim
Storvorde (DK)**
• **ROM, Christian
Aalborg (DK)**

(74) Representative: **Nokia EPO representatives
Nokia Technologies Oy
Karakaari 7
02610 Espoo (FI)**

(54) **SIMULTANEOUS TRANSMISSION BY A USER EQUIPMENT**

(57)    A user equipment comprising means for: enabling user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

**EP 4 687 304 A1**

Processed by Luminess, 75001 PARIS (FR)

**Description**

TECHNOLOGICAL FIELD

Examples of the disclosure relate to simultaneous transmission by a user equipment (UE).

BACKGROUND

Typically a UE has a transceiver with a transmitter chain for uplink signal generation and a receiver chain for downlink signal reception. The transceiver uses a front-end module connected to an antenna that amplifies the signals as well as splitting the signal with a duplex filter (FDD - Frequency Division Duplex) or switching the signal between an uplink and a downlink sequence (TDD - Time Division Duplex). The UE adjusts the level of the signals using a power control (uplink) and a gain control (downlink) unit in the transceiver. In some implementations these level control units may connect to the front-end module for changing the gain mode of the amplifiers in the front-end. The control signal can come from either the transceiver or the baseband chip. To support simultaneous transmission (e.g.carrier aggregation (CA), dual connectivity (DC), multiple radio access technology (RAT), multiple input multiple output (MIMO) then the circuitry (transceiver, front end module, antenna) can be repeated. This would be expensive and at any one time there may be significant un-used circuitry.

BRIEF SUMMARY

According to various, but not necessarily all, examples there is provided a user equipment comprising means for: enabling user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.
In some, but not necessarily all examples, the multiple radio networks use different frequency segments.
In some, but not necessarily all examples, the multiple radio networks use the same cellular radio access technology and different operators or use different radio access technology.
In some, but not necessarily all examples, the user equipment comprises: means for measuring downlink received signal strength per antenna, per frequency segment, per network; wherein allocation of antennas to multiple radio networks for simultaneous transmissions via the antennas to the multiple radio networks, comprises simultaneous allocation of uplink frequency segments to antennas for simultaneous uplink transmissions via the antennas using the allocated uplink frequency segments, based on measured downlink received signal strength per antenna, per frequency segment, per network.
In some, but not necessarily all examples, allocation of antennas to multiple radio networks for simultaneous transmissions via the antennas to the multiple radio networks, comprises selecting a frequency segment for an antenna from a set of frequency segments associated with that antenna.
In some, but not necessarily all examples, the allocation of antennas to multiple radio networks for simultaneous transmissions via the antennas to the multiple radio networks is based on an estimation of throughput associated with the simultaneous allocation of different combinations of uplink frequency segments to antennas for simultaneous uplink transmissions via the antennas. In some, but not necessarily all examples, the allocation of antennas to multiple radio networks for simultaneous transmissions via the antennas to the multiple radio networks is based on optimization, optionally with constraints, , of a cost function based on per frequency segment, per antenna throughput.
In some, but not necessarily all examples, allocation of antennas to multiple radio networks for simultaneous transmissions via the antennas to the multiple radio networks is based on available symbol modulation for allowed combinations of radio networks and antennas.
In some, but not necessarily all examples, the allocation of antennas to multiple radio networks for simultaneous transmissions via the antennas to the multiple radio networks is based on available power headroom for the allowed combinations of uplink frequency segments and antennas.
In some, but not necessarily all examples, the allocation of antennas to multiple radio networks for simultaneous transmissions via the antennas to the multiple radio networks is based on available modulation for the allowed combinations of uplink frequency segments and antennas. In some, but not necessarily all examples, the allocation of antennas to multiple radio networks for simultaneous transmissions via the antennas to the multiple radio networks is configured to control an order of uplink multiple-input multiple output (MIMO), that is a number of simultaneous uplink MIMO streams, wherein each stream is associated with a different antenna.
In some, but not necessarily all examples, the allocation of antennas to multiple radio networks for simultaneous transmissions via the antennas to the multiple radio networks is configured to minimize a difference in power imbalance across the simultaneous uplink MIMO streams.

In some, but not necessarily all examples, the user equipment is configured to perform individual transmission power adjustment for the individual MIMO streams.

In some, but not necessarily all examples, allocation of antennas to multiple radio networks for simultaneous transmissions via the antennas to the multiple radio networks allocates a power amplifier associated with that radio network and antenna.

In some, but not necessarily all examples, the user equipment comprises: a set of power amplifiers, wherein each power amplifier in the set of power amplifiers is associated with a respective antenna and a set of frequency segments for the antenna, wherein there is a different selectable route from the power amplifier to the antenna for each of a plurality of frequency segments in an associated set of frequency segments associated with the radio network.

In some, but not necessarily all examples, the user equipment comprises: antennas, wherein at least one antenna is usable by either of two or more power amplifiers.

According to various, but not necessarily all, examples there is provided a method comprising: user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

According to various, but not necessarily all, examples there is provided a computer program that when executed by one or more processors of a user equipment enable:

user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

According to various, but not necessarily all, embodiments there is provided examples as claimed in the appended claims.

While the above examples of the disclosure and optional features are described separately, it is to be understood that their provision in all possible combinations and permutations is contained within the disclosure. It is to be understood that various examples of the disclosure can comprise any or all the features described in respect of other examples of the disclosure, and vice versa. Also, it is to be appreciated that any one or more or all the features, in any combination, may be implemented by/comprised in/performable by an apparatus, a method, and/or computer program instructions as desired, and as appropriate. The description of a function should additionally be considered to also disclose any means suitable for performing that function

BRIEF DESCRIPTION

Some examples will now be described with reference to the accompanying drawings in which:

FIG. 1 shows an example of the subject matter described herein;
FIG. 2 shows another example of the subject matter described herein;
FIG. 3 shows another example of the subject matter described herein;
FIGs. 4A & 4B show another example of the subject matter described herein;
FIGs. 5A & 5B show another example of the subject matter described herein;
FIG. 6 shows another example of the subject matter described herein;
FIG. 7 shows another example of the subject matter described herein;
FIG. 8 shows another example of the subject matter described herein;
FIG. 9 shows another example of the subject matter described herein;
FIG. 10 shows another example of the subject matter described herein;
FIG. 11 shows another example of the subject matter described herein;
FIG. 12 shows another example of the subject matter described herein;
FIG. 13 shows another example of the subject matter described herein;
FIG. 14 shows another example of the subject matter described herein;
FIG. 15 shows another example of the subject matter described herein.

The figures are not necessarily to scale. Certain features and views of the figures can be shown schematically or exaggerated in scale in the interest of clarity and conciseness. For example, the dimensions of some elements in the figures can be exaggerated relative to other elements to aid explication. Similar reference numerals are used in the figures to designate similar features. For clarity, all reference numerals are not necessarily displayed in all figures.

DETAILED DESCRIPTION

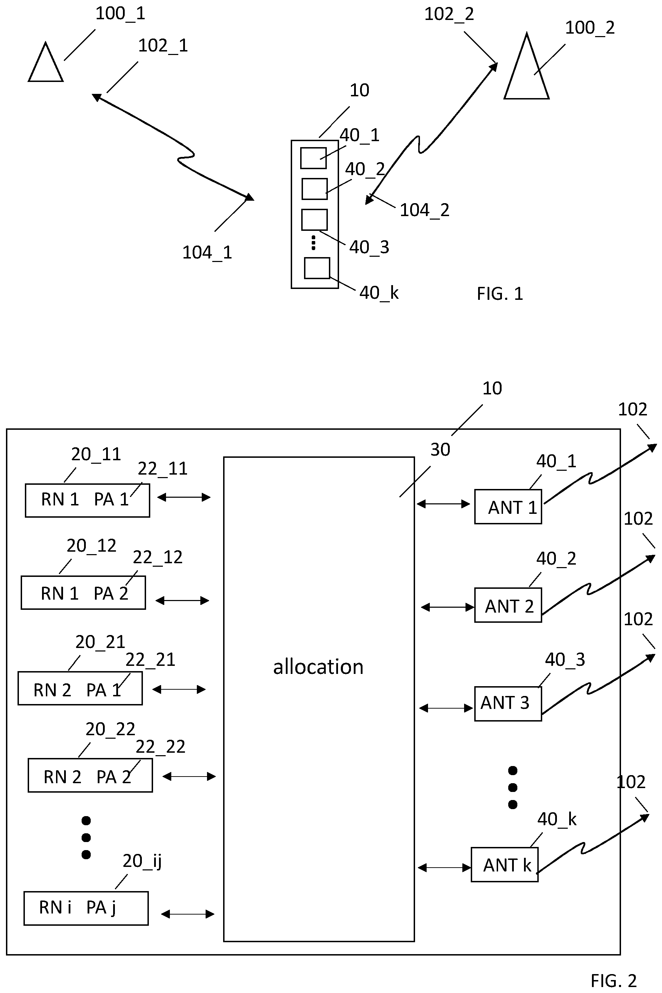

FIG. 1 illustrates an example of a an apparatus 10, for example a user equipment 10. The apparatus 10 comprises multiple antennas 40 including at least a first antenna 40_1 and a second antenna 40_2. In this example there are K antennas 40_1, 40_2, 40_3...40_K.

The user equipment is configured for uplink transmission 102 of radio signals and for downlink reception 104 of radio signals in multiple different networks 100. In this example there are two radio networks 100_1, 100_2. In other examples, there can be more than two radio networks. The radio networks may be of the same radio access technology or of different radio access technologies.

The user equipment is configured for uplink transmission 102_1 of radio signals of a first radio network 100_1 and for downlink reception 104_1 of radio signals of the first radio network 100_1. The user equipment is configured for uplink transmission 102_2 of radio signals of a second radio network 100_2 and for downlink reception 104_2 of radio signals of the second radio network 100_2.

The transmissions to the multiple radio networks 100 by the user equipment 10 are via some or all of the antennas 40. The receptions from the multiple radio networks 100 by the user equipment 10 are via some or all of the antennas 40.

The user equipment is configured for simultaneous transmissions via at least some of the antennas 40.

The simultaneous transmissions can be to the same radio network 100 or can be to different radio networks 100 via at least some of the antennas 40.

The user equipment 10 performs measurements of signals received 104 at at least some of the antennas 40 for the multiple radio networks 100.

The user equipment 10 is configured to provide user-equipment controlled allocation of antennas 40 to multiple radio networks 100 for simultaneous transmissions via the antennas 40 to the multiple radio networks 100. The allocation of antennas 40 to multiple radio networks 100 is determined autonomously by the user equipment 10 not by a radio network 100. The allocation is based on at least measurements of the signals received 104 at at least some of the antennas 40 for the multiple radio networks 100.

Thus the user equipment 10 comprises means for:
enabling user-equipment controlled allocation of antennas 40 to multiple radio networks 100 for simultaneous transmissions via the antennas 40 to the multiple radio networks 100, wherein the allocation is based on at least measurements of signals received at at least some of the antennas 40 for at least one of the multiple radio networks 100, wherein the allocation of antennas 40_k to multiple radio networks 100_i is determined autonomously by the user equipment 10 not by a radio network 100.

The multiple radio networks 100 use different frequency segments. In some, but not necessarily all examples, the multiple radio networks 100 use the same cellular radio access technology and different operators. The user equipment can, for example, have a subscriber identify module for each radio network 100. In some, but not necessarily all examples, the multiple radio networks 100 use different radio access technology. In some, but not necessarily all examples, some of the multiple radio networks 100 use the same cellular radio access technology and different operators, and some of the multiple networks use different radio access technology.

The multiple radio networks 100 are under different control and typically have different access points.

FIG. 2 illustrates an example of the apparatus 10 in more detail.

The apparatus 10 comprises multiple antennas 40 including at least first antenna 40_1 and second antenna 40_2. In this example there are K antennas 40_1, 40_2, 40_3...40_K.

The user equipment is configured for uplink transmission 102 of radio signals and for downlink reception 104 of radio signals in multiple different networks 100.

The user equipment comprises, for each network 100, communication circuitry 20.

The communication circuitry 20, associated with a network 100, can have one or more power amplifiers (PA) 22.

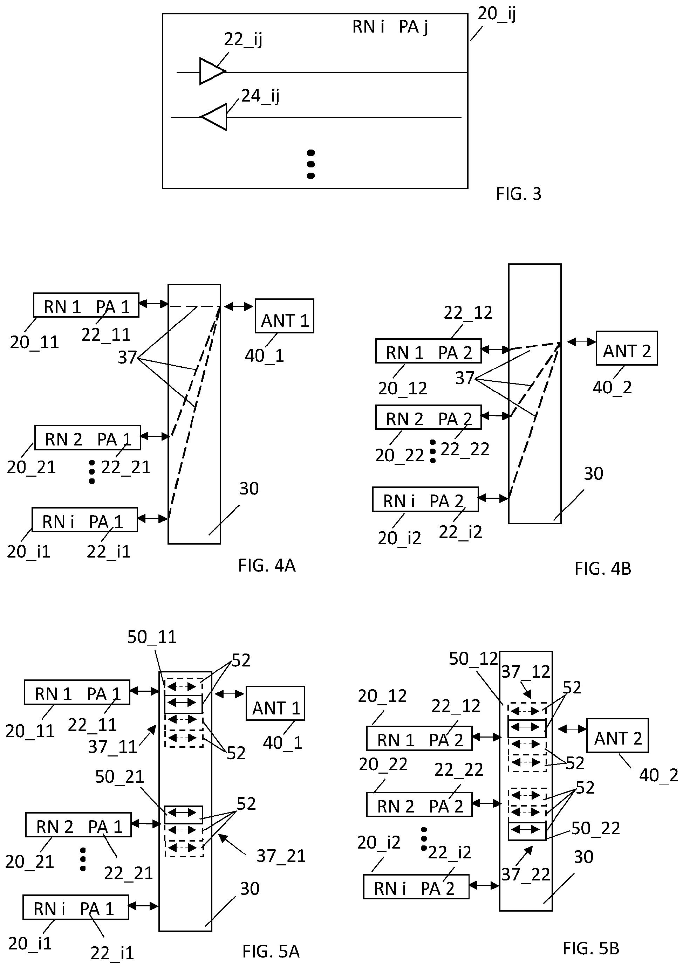

In at least some examples, as illustrated in FIG. 3, each communication circuit 20_ij comprises a transmitter path having a power amplifier 22_ij and one or more receiver paths. Each receiver path can have a low-noise amplifier 24.

In the example illustrated in FIG. 2, a communication circuit 20_ij comprises a power amplifier 22_ij for transmitting in the radio network (RN) 100_i.

In this example, but not necessarily all examples, multiple radio networks are supported. In this example, but not necessarily all examples, multiple power amplifiers are provided for each radio network.. The communication circuit 20_11 comprises a first power amplifier (PA1) 22_11 for a first radio network (RN1) 100_1. The communication circuit 20_12 comprises a second power amplifier (PA2) 22_12 for the first radio network (RN1) 100_1. The communication circuit 20_21 comprises a first power amplifier (PA1) 22_21 for a second radio network (RN2) 100_2. The communication circuit 20_22 comprises a second power amplifier (PA2) 22_22 for the second radio network (RN2) 100_2.

The user equipment 10 comprises allocation circuitry 30 for allocation of antennas 40 to multiple radio networks 100 for simultaneous transmissions via the antennas 40 to the multiple radio networks 100. The allocation is based on at least measurements of signals received at at least some of the antennas 40 for at least one of the multiple radio networks 100. The allocation of antennas 40 to multiple radio networks 100 is determined autonomously by the user equipment 10 not by a radio network 100.

In the examples described, there are multiple power amplifiers 22 that are routed towards a plurality of antenna ports 40. Transmission at an antenna 40 is confined to one power amplifier 22 at a time. Simultaneous transmission by two power amplifiers 22 at the same antenna is not supported because it can cause linearity issues and distortion of the signals.

In some examples, the apparatus 10 supports more power amplifiers than antennas 40.

The apparatus 10 supports different combinations of power amplifiers and antennas 40.

There can be a separate transmitter paths, to each antenna 40, active simultaneously from selected power amplifiers 22. The simultaneously active transmitter paths can be associated with independently variable power control.

The simultaneously active transmitter paths can be associated with the same or different radio access technology. The simultaneously active transmitter paths can be for the same or different frequency segments. Uplink Multiple-input multiple-output (UL-MIMO) uses simultaneously active transmitter paths for the same radio access technology (RAT) and the same frequency segments (with or without independent power control). UL MIMO requires simultaneity at the same frequency segment, and requires a transmitter path from each power amplifier that is for the same frequency segment, for all supported frequency segments. Carrier aggregation (CA) or Dual Connectivity (DC) uses simultaneously active transmitter paths for the same RAT and different frequency segments with independent power control.

The allocation circuitry 30 determines which power amplifiers 22 is and is not used by an antenna, for each antenna. The power amplifiers 22 that are used can be chosen based on criteria, for example, performance (e.g. throughput).

FIGs 4A, 4B illustrate that the apparatus 10 supports different combinations of power amplifiers and antennas 40.

In FIG. 4A, a set of power amplifiers 22i1 is associated with the same antenna 40_1 and different networks 100_i. There is a potential transmitter path 37 from each power amplifier 22_i1 in that set to the antenna 40_1. The allocation circuitry 30 selects only one of those transmitter paths 37. It selects a combination of power amplifier and antenna. In FIG. 4B, a set of power amplifiers 22i2 is associated with the same antenna 40_2 and different networks 100_i. There is a potential transmitter path 37 from each power amplifier 22_i2 in that set to the antenna 40_2. The allocation circuitry 30 selects only one of those transmitter paths 37. It selects a combination of power amplifier and antenna.

The operations illustrated in FIGs 4A and 4B can occur simultaneously. Transmitter paths 37 for different combinations of power amplifier and antenna can be active simultaneously.

FIGs 4A & 4B illustrate an example of allocation of antennas 40 to multiple radio networks 100 for simultaneous transmissions via the antennas 40 to the multiple radio networks 100.

The allocation of antenna 40_1 to one of multiple radio networks 100 is illustrated in FIG. 4A and the simultaneous allocation of antenna 40_2 to one of multiple radio networks 100 is illustrated in FIG. 4B.

For the network 100_i, the communication circuit 20_i1 is used for antenna 40_1 (FIG. 4A) and the communication circuit 20_i2 is used for antenna 40_2 (FIG. 4B).

In FIG. 4A one of the communication circuit 20_i1 is coupled to the antenna 40_1. The allocation circuitry 30 determines which communication circuit 20_i1 is coupled to the antenna 40_1. The set of communication circuits 20_i1 define a set of power amplifiers 22_i1. Each power amplifier 22_i1 in the set is associated with a respective antenna 40_1 and there is a one or more different routes (transmitter paths 37) from a power amplifier 22_i1 to the antenna 40_1.

In FIG. 4B one of the communication circuit 20_i2 is coupled to the antenna 40_2. The allocation circuitry 30 determines which communication circuit 20_i2 is coupled to the antenna 40_2. The set of communication circuits 20_i2 define a set of power amplifiers 22_i2. Each power amplifier 22_i2 in the set is associated with a respective antenna 40_2 and there is a one or more different routes (transmitter paths 37) from a power amplifier 22_i2 to the antenna 40_2.

The allocation circuitry 30 can, for example, be provided as switching circuitry.

The allocation of antennas 40 to multiple radio networks 100_i for simultaneous transmissions via the antennas 40 to multiple radio networks 100 allocates power amplifiers 22_ik associated with that radio network 100 to antennas 40_k.

In at least some examples, one power amplifier 22_ij is allocated per antenna 40_k.

In at least some examples, a particular power amplifier 22_ij can be allocated only to antenna 40_j, whereas the antenna 40_j can be allocated to any one of multiple power amplifiers 22_1j, 22_2j,...

FIGs 5A, 5B illustrate that the apparatus 10 supports different combinations of power amplifiers, frequency segment specific transmitter paths 37 and antennas 40.

In FIG. 5A, a set of power amplifiers 22i1 is associated with the same antenna 40_1 and different networks 100_i. There is a set of potential frequency segment specific transmitter paths 37 from each power amplifier 22_i1 in that PA set to the antenna 40_1. The allocation circuitry 30 selects only one of those frequency segment specific transmitter paths 37. It selects a combination of power amplifier, frequency segment, antenna.

In FIG. 5B, a set of power amplifiers 22i2 is associated with the same antenna 40_2 and different networks 100_i. There is a set of potential frequency segment specific transmitter paths 37 from each power amplifier 22_i2 in that PA set to the antenna 40_2. The allocation circuitry 30 selects only one of those frequency segment specific transmitter paths 37. It selects a combination of power amplifier, frequency segment, antenna.

The operations illustrated in FIG. 5A and FIG. 5B can occur simultaneously. Transmitter paths 37 for different combinations of power amplifier and antenna can be active simultaneously.

FIGs 5A & 5B illustrate an example of allocation of antennas 40 to multiple radio networks 100 for simultaneous transmissions, using selected frequency segments, via the antennas 40 to the multiple radio networks 100.

The allocation of antenna 40_1 to one of multiple radio networks 100 is illustrated in FIG. 5A and the simultaneous allocation of antenna 40_2 to one of multiple radio networks 100 is illustrated in FIG. 5B.

The allocation of an antenna 40 to one of multiple radio networks 100 additionally includes allocation of a frequency segment 52.

For the network 100_i, the communication circuit 20_i1 is used for antenna 40_1 (FIG. 5A) and the communication circuit 20_i2 is used for antenna 40_2 (FIG. 5B).

In FIG. 5A one of the communication circuits 20_i1 is coupled to the antenna 40_1 via one of a plurality of different routes (transmitter paths 37) each associated with a different frequency segment 52. The allocation circuitry 30 determines which communication circuit 20_i1 is coupled to the antenna 40_1 via which transmitter path 37 (which frequency segment 52). The set of communication circuits 20_i1 define a set of power amplifiers 22_i1. Each power amplifier 22_i1 in the set is associated with a respective antenna 40_1 and there are multiple different routes (transmitter paths 37) from a power amplifier 22_i1 to the antenna 40_1 and each route (transmitter path 37) is associated with a different frequency segment 52. There are different selectable routes (transmitter paths 37) from the power amplifier 22_i1 to the antenna 40_1 for each of a plurality of frequency segments 52 in the set 50_i1 of frequency segments 52. The allocation circuitry 30 determines which communication circuit 20_i1 is coupled to antenna 40_1 and which route (transmitter path 37), associated with a particular frequency segment 52, is used for the coupling.

In FIG. 5B one of the communication circuits 20_i2 is coupled to the antenna 40_2 via one of a plurality of different routes (transmitter paths 37) each associated with a different frequency segment 52. The allocation circuitry 30 determines which communication circuit 20_i2 is coupled to the antenna 40_2 via which transmitter path 37 (which frequency segment 52). The set of communication circuits 20_i2 define a set of power amplifiers 22_i2. Each power amplifier 22_i2 in the set is associated with a respective antenna 40_2 and there are multiple different routes (transmitter paths 37) from a power amplifier 22_i2 to the antenna 40_2 and each route (transmitter paths 37) is associated with a different frequency segment 52. There are different selectable routes (transmitter paths 37) from the power amplifier 22_i2 to the antenna 40_2 for each of a plurality of frequency segments 52 in the set 50_i2 of frequency segments. The allocation circuitry 30 determines which communication circuit 20_i2 is coupled to antenna 40_2 and which route (transmitter path 37), associated with a particular frequency segment 52, is used for the coupling.

The allocation circuitry 30 can, for example, be provided as switching circuitry.

The allocation circuitry 30 provides a different selectable route (transmitter paths 37) from the power amplifier 22_ij to the antenna 40_k for each of a plurality of frequency segments 52 in the set 50_ij of frequency segments 52.

In some examples, the plurality of frequency segments 52 in a set 50 can be associated with the power amplifier 22 only (and be the same irrespective of the antenna 40 used).

In some examples, the plurality of frequency segments are allocated or allocatable by a network associated with the power amplifier 22_ij.

Power amplifiers 22_11, 22_21,...22_i1 form a set of power amplifiers 22 associated with a respective antenna 40_1. There is a set 50_11 of frequency segments 52 associated with the set of alternative transmitter paths 37_11 between power amplifier 22_11 (for the radio network 100_1) and the respective antenna 40_1. The set 50_11 of frequency segments 52 comprises a plurality of frequency segments 52. There is a potential route (transmitter path 37_11) from the power amplifier 22_11 to the antenna 40_1 for each of the plurality of frequency segments 52 in the associated set 50_11 of frequency segments 52. One of the transmitter paths 37_11 is selected as a route from the power amplifier 22_11 to the antenna 40_1. There is a set 50_11 of frequency segments 52 associated with the set of alternative transmitter paths 37_11 between power amplifier 22_11 (for the radio network 100_2) and the respective antenna 40_1. The set 50_21 of frequency segments 52 comprises a plurality of frequency segments 52. There is a potential route (transmitter path 37_21) from the power amplifier 22_21 to the antenna 40_1 for each of the plurality of frequency segments 52 in the associated set 50_21 of frequency segments 52. One of the transmitter paths 37_21 is selected as a route from the power amplifier 22_21 to the antenna 40_1.

Power amplifiers 22_12, 22_22,...22_i2 form a set of power amplifiers 22 associated with a respective antenna 40_2. There is a set 50_12 of frequency segments 52 associated with the set of alternative transmitter paths 37_12 between power amplifier 22_12 (for the radio network 100_1) and the respective antenna 40_2. The set 50_12 of frequency segments 52 comprises a plurality of frequency segments 52. There is a potential route (transmitter path 37_12) from the power amplifier 22_12 to the antenna 40_2 for each of the plurality of frequency segments 52 in the associated set 50_12 of frequency segments 52. One of the transmitter paths 37_12 is selected as a route from the power amplifier 22_12 to the antenna 40_2. There is a set 50_22 of frequency segments 52 associated with the set of alternative transmitter paths 37_22 between power amplifier 22_22 (for the radio network 100_2) and the respective antenna 40_2. The set 50_22 of frequency segments 52 comprises a plurality of frequency segments 52. There is a potential route (transmitter path 37_22) from the power amplifier 22_22 to the antenna 40_2 for each of the plurality of frequency segments 52 in the associated set 50_22 of frequency segments 52. One of the transmitter paths 37_22 is selected as a route from the power amplifier 22_22 to the antenna 40_2.

The set 50_11 of frequency segments 52 associated with the radio network 100_1, can be different to the set 50_21 of frequency segments 52 associated with the radio network 100_2.

The set 50_12 of frequency segments 52 associated with the radio network 100_1, can be different to the set 50_22 of frequency segments 52 associated with the radio network 100_2.

The set 50_11 of frequency segments 52 associated with the radio network 100_1 and the antenna 40_1, can be the same or different to the set 50_12 of frequency segments 52 associated with the radio network 100_1 and the antenna 40_2.

The set 50_21 of frequency segments 52 associated with the radio network 100_2 and the antenna 40_1, can be the same or different to the set 50_22 of frequency segments 52 associated with the radio network 100_2 and the antenna 40_2.

In some examples, the plurality 50 of frequency segments 52 can be associated with the power amplifier 22 only (and be the same irrespective of the antenna used). Then the set 50_11 of frequency segments is the same as the set 50_12 of frequency segments and the set 50_21 of frequency segments is the same as the set 50_22 of frequency segments.

It will therefore be appreciated that there can be multiple simultaneous transmissions. The multiple simultaneous transmissions have individual power control and own power amplifier 22. The multiple simultaneous transmissions can be in the same network 100 at different frequency segments 52 (e.g. carrier aggregation or dual connectivity).

The multiple simultaneous transmissions can be in the same network 100 at the same frequency segments 52 (e.g. multiple input multiple output). The uplink frequency segments can be defined by network. The UE autonomously allocates them amongst antennas 40.

In at least some examples, allocation of antennas 40 to multiple radio networks 100 for simultaneous transmissions via the antennas 40 to the multiple radio networks 100, comprises simultaneous allocation of uplink frequency segments to antennas 40 for simultaneous uplink transmissions via the antennas 40 using the allocated uplink frequency segments, based on measured downlink received signal strength per antenna 40, per frequency segment 52, per network 100. The allocation of antennas 40 to multiple radio networks 100_1, 100_2 for simultaneous transmissions via the antennas 40_1, 40_2 to the multiple radio networks 100_1, 100_2, comprises simultaneous allocation of uplink frequency segments 52 to antennas 40_1, 40_2 for simultaneous uplink transmissions via the antennas 40_1, 40_2 using the allocated uplink frequency segments 52, based on measured downlink received signal strength, across all the frequency segments 52, for antenna 40_1 for network 100_1, for antenna 40_1 for network 100_2, for antenna 40_2, for network 100_1, for antenna 40_2, for network 100_2.

In at least some examples, allocation of antennas 40 to multiple radio networks 100 for simultaneous transmissions via the antennas 40 to the multiple radio networks 100, comprises selecting a frequency segment 52 for an antenna 40_k from a set 40_ik of frequency segments 52 associated with that antenna 40_k.

In at least some examples, a set 50_ik of uplink frequency segments associated with one antenna 40_k is one or more of:

the same as a set of uplink frequency segments associated with another antenna 40;
different to a set of uplink frequency segments associated with another antenna 40;
mutually exclusive in relation to a set of uplink frequency segments associated with another antenna 40.

In at least some examples a set of uplink frequency segments associated with one antenna 40_k and a set of uplink frequency segments associated with another antenna 40 are: in same frequency range or in different frequency ranges and for the same radio access technology or different radio access technology.

Power control of uplink transmissions via the antennas 40 using the allocated uplink frequency segments 52, comprises separate power control of each transmission via an antenna 40.

The user equipment 10 is configured to perform per antenna 40_k, per frequency segment 52 power control.

The allocation circuitry 30 can be a front-end module (FEM).

The allocation circuitry 30 is configured to provide in parallel more than one active transmitter path, where each transmitter path 37 is for a different combination of power amplifier 22 and antenna 40.

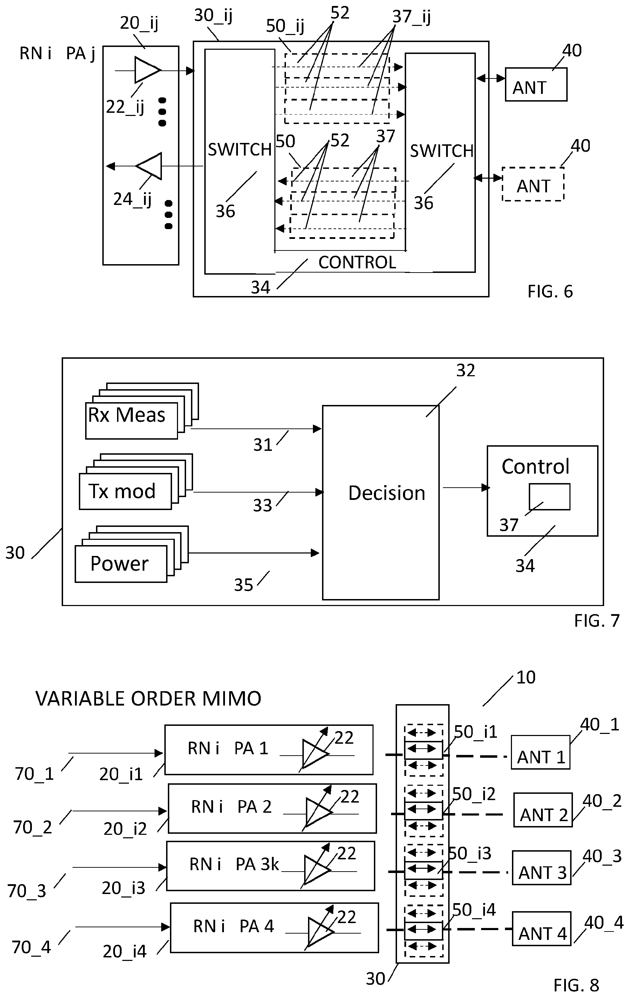

FIG. 6 illustrates an example of a part of the allocation circuitry 30.

This part 30_ij of the allocation circuitry 30 is for coupling the communication circuit 20_ij with one or more antennas 40.

A set 50_ij of uplink frequency segments 52 is associated with the routes (transmitter paths 37_ij) from the communication circuit 20_ij to the antenna 40. For example, a transmitter path 37 associated with a particular frequency segment 22 comprises at least a frequency selective filter for that particular uplink frequency segment 52. Switching circuitry 36 interconnects the communication circuit 20_ij to the antenna 40 via a selected transmitter path 37 associated with a particular frequency segment 52.

In some examples, the selected transmitter path 37 (selected route) associated with a particular frequency segment 52 interconnects with the antenna 40. In some examples, switching circuitry 36 interconnects the selected route 37 associated with a particular frequency segment 52 with any one of one or more antennas 40.

A set 50 of downlink frequency segments 52 is associated with the routes 37 to the communication circuit 20_ij from the antenna(s) 40. For example, a route 37 associated with a particular frequency segment 52 comprises at least a frequency selective filter for that particular downlink frequency segment 52. Switching circuitry 36 interconnects the communication circuit 20_ij to the antenna 40 via a selected route 37 associated with a particular frequency segment 52. In some examples, the selected route 37 associated with a particular frequency segment 52 interconnects with the antenna 40. In some examples, switching circuitry 36 interconnects the selected route 37 associated with a particular frequency segment 52 with any one of one or more antennas 40.

Control circuitry 34 controls the switching circuitry 36.

FIG. 7 illustrates an example of allocation circuitry 30.

Downlink received signal strength 31 per antenna 40, per frequency segment 52, per network 100 is measured.

The allocation of antennas 40 to multiple radio networks 100 for simultaneous transmissions via the antennas 40 to the multiple radio networks 100, comprises simultaneous allocation of uplink frequency segments 52 to antennas 40 for simultaneous uplink transmissions via the antennas 40 using the allocated uplink frequency segments 52, based on measured downlink received signal strength per antenna 40, per frequency segment 52, per network 100.

The power amplifiers 22 simultaneously allocated to antennas 40 can be changed based on changes in measured downlink received signal strength per antenna 40, per frequency segment, per network.

The transmitter paths 37 between power amplifiers 22 and antennas 40 can be changed based on changes in measured downlink received signal strength per antenna 40, per frequency segment, per network.

In some examples, the allocation of antennas 40 to multiple radio networks 100 for simultaneous transmissions via the antennas 40 to the multiple radio networks 100 is based on an estimation of throughput associated with the simultaneous allocation of different combinations of uplink frequency segments 52 to antennas 40 for simultaneous uplink transmissions via the antennas 40.

In some examples, the allocation of antennas 40 to multiple radio networks 100 for simultaneous transmissions via the antennas 40 to the multiple radio networks 100 is based on optimization, with constraints, if any, of a cost function based on per frequency segment, per antenna 40 throughput.

The cost function can be optimized subject to constraints, if any e.g. priority, min throughput, max throughput, target throughput.

The cost function can, for example, maximize total throughput (e.g. across all networks). The cost function can, for example, minimize a total difference in throughput (e.g. for a network) from target throughputs (e.g. for that network).

The cost function can, for example, prevent one or more throughputs (e.g. for a network) from falling below target throughputs (e.g. for that network).

In some examples, the allocation of antennas 40 to multiple radio networks 100 for simultaneous transmissions via the antennas 40 to the multiple radio networks 100 is based on available power headroom for the allowed combinations of uplink frequency segments and antennas 40.

Power head room (PHR) can be determined based on measured values 35 of downlink received signal strength per antenna 40, per frequency segment. A DL propagation loss, provides a Tx output power, which determines power head room (PHR).

In some examples, the allocation of antennas 40 to multiple radio networks 100 for simultaneous transmissions via the antennas 40 to the multiple radio networks 100 is based on available modulation 33 for the allowed combinations of uplink frequency segments and antennas 40. The modulation can be spatial modulation and/or symbol modulation.

In some examples, the allocation of antennas 40 to multiple radio networks 100 for simultaneous transmissions via the antennas 40 to the multiple radio networks 100 is based on available symbol modulation, for allowed combinations of radio networks 100 and antennas 40. It can for example, be based on modulation order (constellation size), that is, the number of bits per symbol. Thus the power amplifiers 22 simultaneously allocated to antennas 40 for a radio network can be changed in response to a change in available symbol modulation for that radio network 100.

In some examples, allocation of antennas 40 to multiple radio networks 100 for simultaneous transmissions via the antennas 40 to the multiple radio networks 100, comprises allocating no more than one power amplifier 22 per antenna 40.

In some examples, the simultaneous allocation of uplink frequency segments to antennas 40 for simultaneous uplink transmissions via the antennas 40 is subject to constraints imposed by a network or the apparatus. For example, a maximum number of uplinks e.g. imposed by network-specific operators.

FIG. 8 illustrates the apparatus 10 being used for multiple-input multiple output (MIMO). There is a communication circuit 20_ij comprising a power amplifier 22_ij for each MIMO stream 70_j.

The allocation circuitry 30 selectively couples a power amplifier 22_ij to one antenna 40_k, for example antenna 40_j. The allocation circuitry 30 selectively controls the order of MIMO. For example, it connects one power amplifier 22 to one antenna. For example, it connects two power amplifiers 22 to two antennas. For example, it connects four power amplifiers 22 to four antennas 40.

The power of each MIMO stream 70 can be independently controlled. For example, each power amplifier 22_ij can be controlled independently of the other power amplifiers.

In this example, the allocation of antennas 40 to multiple radio networks 100 for simultaneous transmissions via the antennas 40 to the multiple radio networks 100 is configured to control an order of uplink multiple-input multiple output (MIMO), that is a number of simultaneous uplink MIMO streams, wherein each stream is associated with a different antenna 40.

In this example, the allocation of antennas 40 to multiple radio networks 100 for simultaneous transmissions via the antennas 40 to the multiple radio networks 100 is configured to minimize a difference in power imbalance across the simultaneous uplink MIMO streams.

In this example, the apparatus 10 is configured to perform individual transmission power adjustment for the individual MIMO streams 70_i.

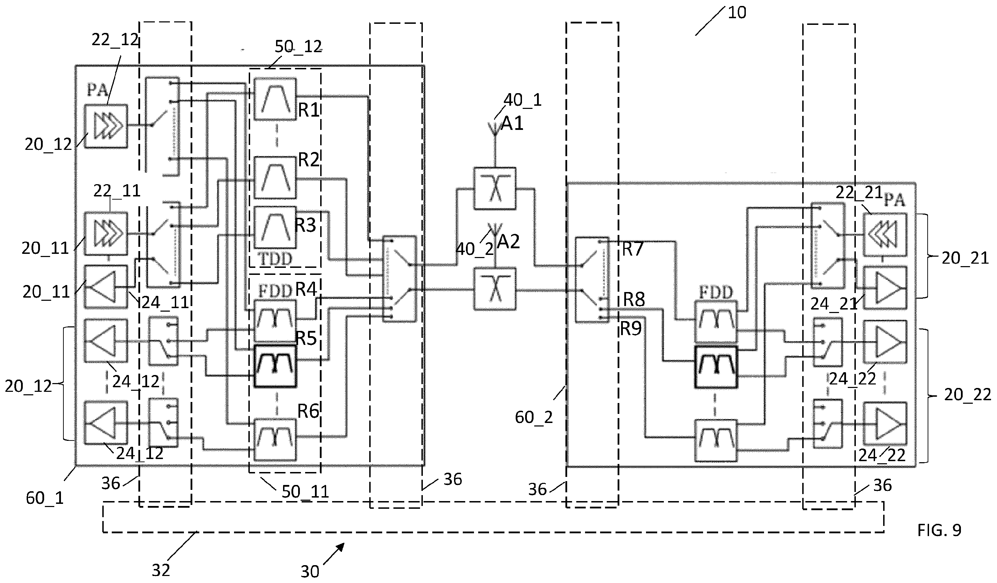

FIG. 9 illustrates an example of allocation circuitry 30 comprising switching circuitry 36. The allocation circuitry 30 comprises control circuitry 34 that causes the switching circuitry 36 to couple particular combinations of antenna 40 and power amplifier 22 together via a particular frequency segment specific route, if appropriate.

To the left, there is a first front end module 60_1. It comprises communication circuits 20_1i for a first network operating in a first frequency range. To the right, there is a second front end module 60_2. It comprises communication circuits 20_2i for a second network operating in a second frequency range. In the center there are antennas 40_1, 40_2 shared by the communication circuits 20_1i for the first network and the communication circuits 20_2i for a second network operating in a second frequency range.

The communication circuits 20_1i for the first network operating in a first frequency range comprise a power amplifier 22_1i and one or more low noise amplifiers 24_1i.

There can be one or more different routes between a power amplifier 22_1i and an antenna 40. The multiple different routes between a particular power amplifier 22_1i and a particular antenna 40 are associated with different frequency segments.

There can be one or more different routes between a low noise amplifier 22_1i and an antenna 40. The multiple different routes between a particular low noise amplifier 24_1i and a particular antenna 40 are associated with different frequency segments.

The communication circuits 20_2i for the second network operating in the second frequency range optionally comprise a power amplifier 22_2i and comprise one or more low noise amplifiers 24_2i.

There can be one or more different routes between a power amplifier 22_2i and an antenna 40. Multiple different routes, if they exist, between a particular power amplifier 22_1i and a particular antenna 40 are associated with different frequency segments.

There can be one or more different routes between a low noise amplifier 24_1i and an antenna 40. The multiple different routes between a particular low noise antenna 24_1i and a particular antenna 40 are associated with different frequency segments.

The allocation circuitry 30 comprises control circuitry 34 that causes the switching circuitry 36 to couple particular combinations of antenna 40 and power amplifier 22 together via a particular frequency segment specific route, if appropriate. Only one power amplifier is coupled to an antenna.

The allocation circuitry 30 comprises control circuitry 32 that causes the switching circuitry 36 to couple particular combinations of antenna 40 and low noise amplifier 24 together via a particular frequency segment specific route, if appropriate. One or more low noise amplifiers can be coupled to an antenna.

There are three transmission routes R1, R2, R3 to antenna 40_1 rom transmitter power amplifier 22_11 of communication circuit 20_11. There are three reception routes R1, R2, R3 from antenna 40_1 to low noise amplifier 24_11 of communication circuit 20_11.

There are three transmission routes R4, R5, R6 to antenna 40_2 from transmitter power amplifier 22_12 of communication circuit 20_12. There are three reception routes R4, R5, R6 from antenna 40_2 to low noise amplifiers 24_12 of communication circuit 20_12. The reception routes R4, R5 are to one low noise amplifiers 24_12 and the reception route R6 is for another low noise amplifier.

There is no transmission route from transmitter power amplifier 22_11 of communication circuit 20_11 to the antenna 40_2. There is no transmission route from transmitter power amplifier 22_12 of communication circuit 20_12 to the antenna 40_1. There is one transmission route R7 to antenna 40_1 from transmitter power amplifier 22_21 of communication circuit 20_21. There are two transmission routes R8 and R9 to antenna 40_2 from transmitter power amplifier 22_21 of communication circuit 20_21.

There is one reception route R7 from antenna 40_1 to low noise amplifier 24_22 of communication circuit 20_22. There are two reception routes R8, R9 from antenna 40_2 to low noise amplifiers 24of communication circuit 20. The reception routes R7, R8 are to one low noise amplifier 24_22 of communication circuit 20_22 and the reception route R9 is for another low noise amplifier 24_21 of communication circuit 20_21.

The alternative routes R1, R2, R3 associated with the antenna 40_1 support alternative frequency segments 52. The alternative routes R4, R5, R6 associated with the antenna 40_2 support alternative frequency segments 52. . The alternative route R7 is for antenna 40_1. The alternative routes R8, R9 for antenna 40_2 supports alternative frequency segments 52.

In some but not necessarily all examples, the alternative routes R1, R2, R3 associated with the antenna 40_1 support alternative frequency segments 52 for network 100_1 and the alternative routes R4, R5, R6 associated with the antenna 40_2 support alternative frequency segments 52 for network 100_1 . In some but not necessarily all examples, the alternative routes R8, R9 for antenna 40_2 supports alternative frequency segments 52 for network 100_2.

Since antennas 40_1, 40_2 (A1, A2 respectively) are shared there's only uplink supported from one PA 22 at each antenna 40. This leaves unused power amplification, requiring that the PA's that are active are chosen based on optimum performance.

The front-end module 60_1 supports more than one radio path. With N PAs and M (M>=N) LNAs that are switched towards X antenna ports (N=2, M=3, X=2).

Transmission of an antenna is best kept at one frequency only at a time, meaning that simultaneous transmission of two separate frequency segments at the same antenna 40 will cause severe issues in spectrum as two PAs will be transmitting into the output of the other PA, causing linearity issues and distortion of the signals.

The front-end module 60_1 can support N (N=2) simultaneous Tx (limited by PAs).

The front-end module 60_1 can support M (M=3) simultaneous Rx (limited by LNAs).

The front-end module 60_2 supports more than one radio path. With N PAs and M (M>=N) LNAs that are switched towards X antenna ports (N=1, M=3, X=2).

The front-end module 60_2 can support N (N=1) Tx (limited by PAs).

The front-end module 60_2 can support M (M=3) simultaneous Rx (limited by LNAs).

More than one transmitter path can be active simultaneously. The simultaneous active transmitter paths can be in the same front-end module 60_1 (e.g. R1/R2/R3 @ A1, R4/R5/R6 @ A2) or can be in different front-end modules (e.g. R7 @ A1, R4/R5/R6 @ A2).

There is an active transmitter path to each antenna. The active transmitter paths can be associated with: the same or different frequency segments 52, independent power control, same or different network 100. For MIMO, use the same network, a common frequency segment (with or without independent power control). For CA/DC, use same network, different frequency segments (with independent power control).

The apparatus (UE) 10 can comprise hardware and control units to support different power level control of each transmission path.

For the downlink level adjustment of the apparatus 10, the downlink signal is attenuated or amplified to a level that is optimum at the ADC conversion process, which may be implementation specific. The network is not involved in the UE downlink gain adjustment. For MIMO the UE must apply different gain control for each antenna port to bring all input signals to the closest level possible of the same strength. The UE can base these adjustments on the received signal strength or the signal strength of the coded signal.

The UE uplink power control can work in two ways. Either the UE is open loop power control mode, where the UE UL power level is based on the detected downlink signal level and a target power signaled by the network to the UE, or it may be guided by the network that instructs the UE via closed loop power control mode of which output power it must transmit the uplink signal at via for example dynamic control regulation commands..

The uplink power control of a UE is determined on either an input received signal strength converted to a corresponding transmission output power or the UE power control is based on system information from the network managing the UE output power level.

This means that the UE determines either on its own or from the network information what adjustment to make on the configured output power.

5G UL MIMO only supports the same adjustment for every power control unit and the output power at the output stage of the transceiver to be equal when the UE operates.

A UE design that pushes for maximum uplink throughput must make use of the uplink at each antenna, and performs an evaluation at the UE that optimizes the antenna mapping on a per frequency segment (and if appropriate on a per RAT basis).

The UE is aware of the configuration and performance of each antenna. It uses the information of the received signal power across all supported frequency ranges to determine how to optimize the uplink of each antenna port. This determination can consider modulations and channel bandwidths.

The UE benefits from deriving the optimum configuration of the uplink as a function of downlink received signal strength of each antenna port having considered the power headroom of the active PAs for creating the uplink signals.

We can express the uplink throughput as a cost function per Tx path, per frequency segment across all antennas:

$$\text{UE}_{\text{uplink}} = \sum_{\text{antenna ports}=i}^{\text{antenna ports}=n} \text{throughput(freq segment, power amplifier)}$$

We can express the uplink throughput as a cost function:

$$\text{UE}_{\text{uplink}} = \sum_{\text{antenna ports}=i}^{\text{antenna ports}=n} f(\text{freq segment, PHR, modulation} + \text{coding, received signal power})$$

, where:

- n is the number of antenna ports the UE can transmit at, and i is the current port.
- freq segment is the frequency at which the following parameters are associated. There can be more than one frequency of operation linked to an antenna port.
- PHR is the headroom of the PA that connects to antenna port i

    ○ Considers frequency, meaning there could be more than one PA.
    ○ Considers the PHR can be different depending on the PA and the frequency.

- Modulation + coding linked to the frequency and the PHR the modulation and coding affects the power headroom and the throughput of the uplink.
- Received signal strength is the metric of the wanted signal power associated with the antenna port. There can be more than one received signal strength per antenna port since it depends on frequency of operation linked to an antenna port.

The UE considers the parameters as listed for the uplink transmissions it can maximize the uplink throughput regardless of the frequency towards each antenna port.

Antennas are shared between front end modules. The UE may be designed with front-end modules that supports the same and different segments of frequency spectrum.

A front-end module at a first frequency range could be supported with a single front-end module serving two antennas, that are shared with another front-end module of a different frequency range to the first frequency range (a second frequency range).

The sharing is enabled by implementing a diplexer (not excluding triplexers or higher means of sharing) and it may include dual resonant (not excluding higher order resonances) with potential antenna tuners to optimize the antennas.

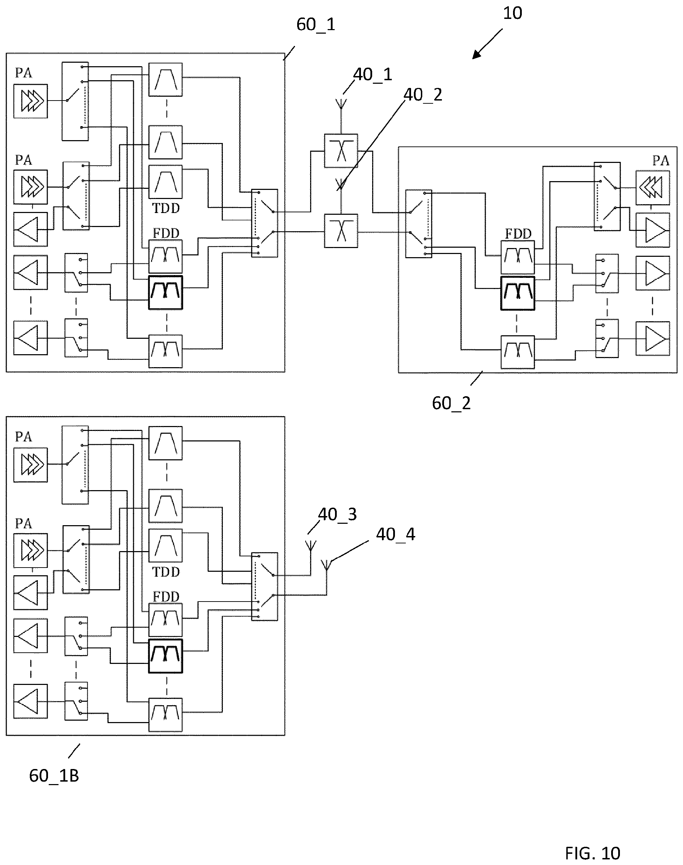

In FIG. 10, there are two similar front-end modules 60_1, 60_1B of the same frequency range. These two modules allow MIMO operation [same frequency] as well as operation across different frequency segments 52 within the same frequency range simultaneously.

There are four antenna 40_1, 40_2, 40_3, 40_4. The antennas 40_1, 40_2 are shared between front end module 60_1 and front-end module 60_2, as illustrated in FIG. 10. The antennas 40_3, 40_4 are not shared and are used by front end module 60_1B.

The front-end module 60_1 has a power amplifier for antenna 40_1 and a power amplifier for antenna 40_2. The front-end module 60_1B has a power amplifier for antenna 40_3 and a power amplifier for antenna 40_4.

The front-end module 60_2 has a power amplifier for antennas 40_1, 40_2.

This example system has in total 5 uplink PAs and even more downlink paths, since the dashed lines at the LNAs allow any number of supported downlink bands based on design.

From this system the UE can measure among all the downlink paths the highest received signal strength from the antennas. For the shared antennas this can be of both frequency ranges simultaneously measured. In downlink the four antennas and the two diplexers allow at least 6 receive paths to be active simultaneously.

Among all the combinations of the at least six simultaneous downlink paths, of which two of the same frequency can be of operation in the first frequency range , the UE evaluates the propagation loss to identify those of least loss.

The UE then converts the downlink propagation loss to a transmit output power for the corresponding uplink at each antenna.

From these calculated uplink-transmit powers the UE will also know the power headroom, which includes the ability of the UE to match the uplink power of the same frequency segment towards more antennas (up to two antenna ports in the example). This ability is important for optimal MIMO layer balancing in uplink and the UE must determine if UL MIMO grants a better throughput and power control, than a combination of operations at different frequency segments. The UE supports separate adjustments to each uplink.

For the different frequency range to the first frequency range there could be: up to four different/same frequency segments used simultaneously

e.g. 4 or less different frequency segments
e.g. 3 different segments, plus one segment covering the same frequency (2xULMIMO),
e.g. 2 different segments, plus two segments covering the same frequencies 2x(2xULMIMO)

Between all these combinations the UE evaluates the modulation + coding for highest obtainable throughput, which also includes the channel bandwidth available for each frequency segment.

The second frequency range module 60_2 supports the operation of the two first frequency modules 60_1, 60_1B, with 2 additional downlink segments. It also has one PA, so if the module 60_1 has an uplink configuration towards an antenna port that is better in the sense of propagation loss, received signal power, power headroom and/or modulation + coding including channel bandwidth, then the UE may decide rather to place the uplink of the module 60_2 on either of the two antennas 40_1, 40_2 shared through the diplexer than dedicating both PAs of the module 60_1, 60_1B to the shared antennas 40_1, 40_2.

The supported MIMO determines the number of PAs that must cover the same frequency segment of a frequency range. UEs will not support an indefinite amount of unique antenna ports for each uplink/downlink path.

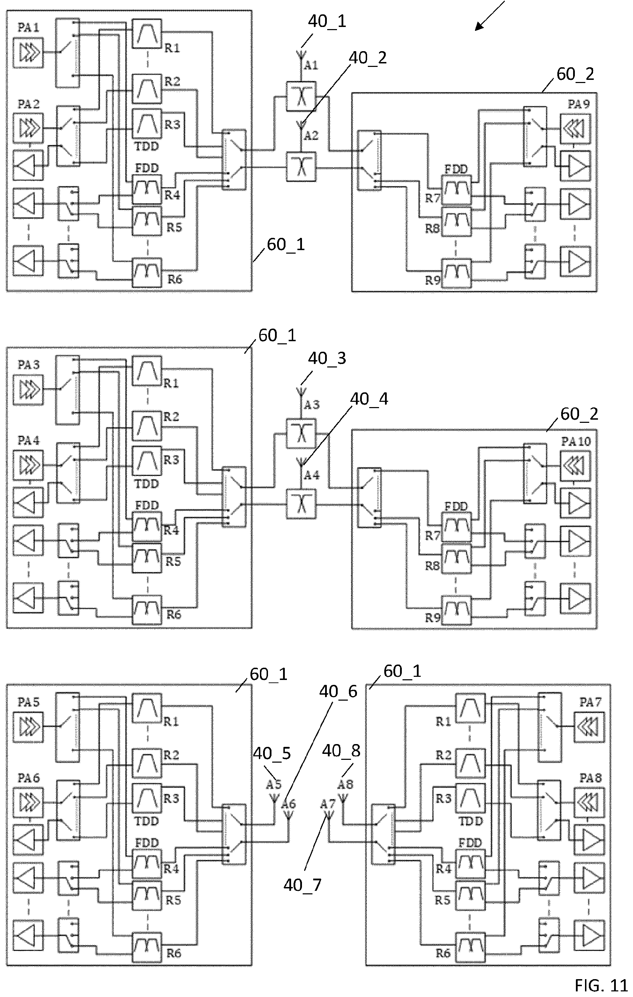

FIG. 11 shows a further expansion of the UE front-end system and antenna port routing that has both shared and individual antenna ports. The antennas 40_i are referred to as antennas Ai.

The system has the same two frequency ranges a first frequency range, F1, for the first front end module 60_1 and a different, second frequency range belonging to the second front end module 60_2 as in the former example, but it is now seen how, for the first frequency range F1, all frequency segments (R1,R2,R3,R4,R5 and R6) are supporting 4xMIMO, and that the frequency segments are distributed towards the antenna ports as (R1,R2,R3) @A1,A3,A5,A8 and (R4,R5,R6) @A2,A4,A6,A7, which means the UE supports 4x4MIMO on any band combination of (R1,R2,R3) with (R4,R5,R6).

Additionally, the frequency segments of the second frequency range F2is distributed R7@A1,A3 and (R8,R9) @A2,A4 meaning that the UE supports up to 2x2MIMO in 1 uplink and 2x2 in two downlink combinations of R7 with (R8,R9).

Since A1, A2, A3, A4 are shared there's only uplink supported from one PA at each antenna selected from PA1, PA2, PA3, PA4, PA9 and PA10. This leaves unused power amplification in the apparatus 10 and the PA's that are active are chosen based on optimum performance.

For PA9 and P10 the power headroom (PHR), the RX_power and the modulation and coding including bandwidth will determine the candidates that compares to those of the first frequency range F1 accessing the same antennas. In case a higher throughput is possible at less power (higher Rx_power determined -> higher PHR possible) on range F2, it will be better to allow range F2 the uplink of A1..A4 (two antennas), while the first frequency range F1 may use the "free" antennas including uplink, since the second frequency range F2 does not have PAs to support four uplinks.

Continuing the example of the second frequency range F2, claiming two antennas of A1..A4, the first frequency range F1 must determine among the remaining frequency segments R1..R6 which allows best throughput using again the power headroom (PHR), the RX_power and the modulation and coding including bandwidth.

The UE compares the PHR across the two antennas of A1..A4 available with the antennas A5..A8 to determine with R1...R6 which MIMO layers are of best application, which is determined by having the least delta in PHR across a frequency segment R1..R6 and a highest PHR in total for the connection with the best modulation + coding including the bandwidth.

A least PHR delta allows the UE to correct the power level based on the delta in RX_power, to compensate propagation loss, which increases the UL MIMO effective throughput. The UE may end up granting a single frequency segment R1..R6 to four uplink antennas, alternately if the RX_power levels are in favor of individual segments the UE may route specific frequency segments 52 through dedicated PAs (PA1..PA8) to the antenna with best RX_power.

In some applications the UE is not allowed to go beyond a certain number of uplinks to save battery life, minimize heating, maximum allowed emission towards tissue and avoid self-interference from non-linear products created of the multiple uplinks. This means that the down-selection of which antennas to use with which PA focus on only the best performing results of the evaluation across all antennas.

In some applications the UE may be restricted in the combination of frequency segments if they all belong to the same RAT and operator, however if they are between RAT, there is no controlled restriction for the UE not to select freely among frequency segments not shared between RAT including different networks.

With the applicability of individual uplink powers mapped towards the antennas the UE could differentiate the powers based on individual RX power levels at each frequency segments at each antenna port.

Each frequency segment (R) has unique power control adjustments, which is based on the received signal strength of the frequency segment 52 at the downlink of each antenna 40. The UE 10 can adjust the power so that the uplink reflects the downlink deltas.

The decision of what uplink activity the UE must configure the network may play an important role. The network may provide the UE information of the exact uplink performance at each antenna port, which will consider the uplink channel propagation conditions, which are not seen in the downlink received signal strength. Based on such information from the network the UE can choose differently in the connection of uplink paths towards the antennas.

The UE can be connected to more than one network of more than one radio access technology. The UE is aware that the information of the conditions at each antenna is not transparent across networks, so the UE can decide to place the uplink configurations relative to the optimum configuration across both (or more) radio access technologies if this serves the UE better for data throughput. Such optimization could for instance be applied in Multi-Sim and Multi-RAT devices.

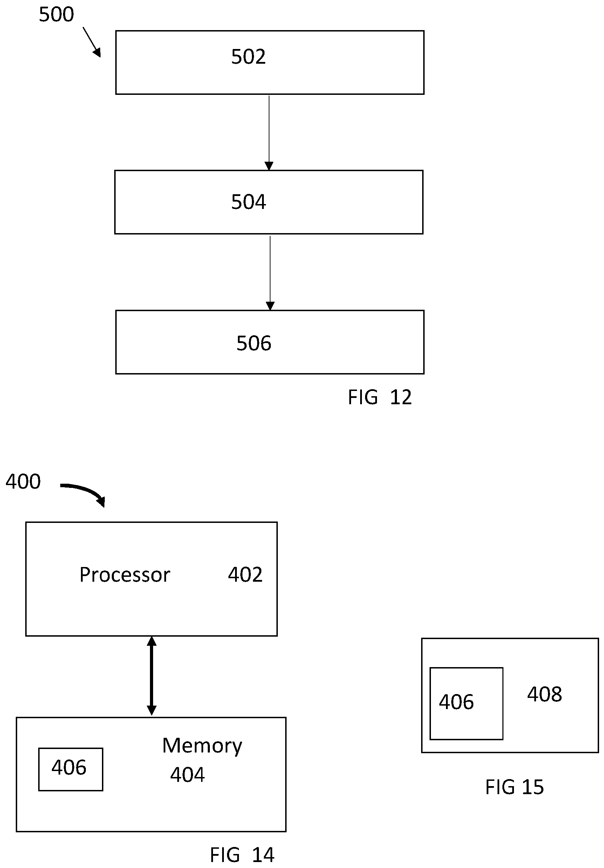

FIG. 12 illustrates an example of a method 500.

At block 502, the method 500 determines supported frequency segments 52 for the possible combinations of antenna ports and power amplifiers.

At block 504, the method 500 determines for each of the supported frequency segments (for each of the combinations of antenna ports and power amplifiers) decision parameters.

At block 506, the method determine allocation of power amplifiers, frequency segments and antenna ports based on the allocation parameters. Switching is configured so that power amplifiers, frequency segments and antenna ports are used as allocated.

A single selected power amplifier is allocated to an antenna. A single frequency segment dependent transmitter path is allocated from the selected power amplifier to the antenna.

The decision parameters can, for example, comprise one or more of: allocated parameters (e.g. modulation and coding), service parameters (e.g. channel bandwidth for UL data), measured parameters (e.g. measured DL received signal power), and/or consequential parameters (e.g. power headroom determined from measured DL received signal power). In some examples, the allocation is based on improving a cost function. In some examples, improving the cost function improves UL throughput.

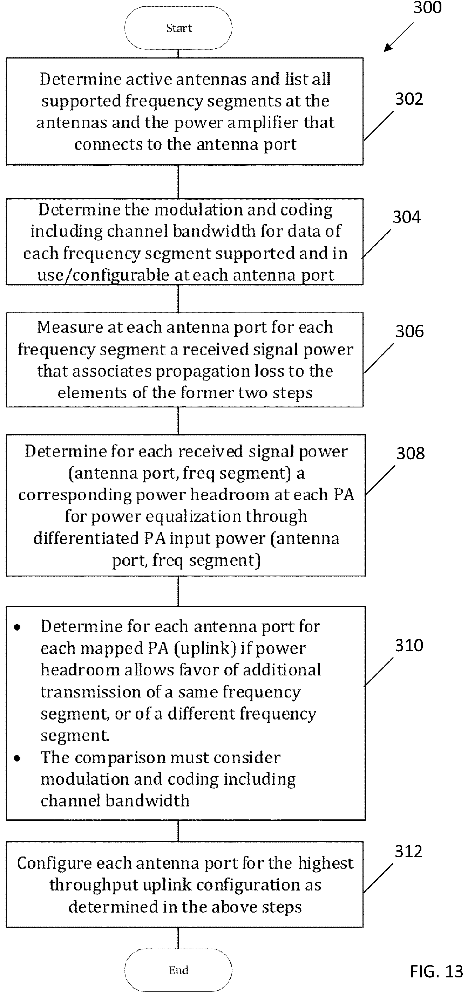

FIG. 13 illustrates an example of a method 300. This is an example of the method 500.

At block 302 of the method 300, the method 300 determines active antenna ports, determine power amplifiers that connect to active antenna ports and lists all supported frequency segments for the combinations of antenna ports and power amplifiers.

At block 304 of the method 300, for each of the supported frequency segments (for each of the combinations of antenna ports and power amplifiers) determine the modulation and coding and channel bandwidth for data.

At block 306 of the method 300, for each of the supported frequency segments (for each of the combinations of antenna ports and power amplifiers) measure received signal power.

At block 308 of the method 300, for each of the supported frequency segments (for each of the combinations of antenna ports and power amplifiers) use the measured received signal power to determine a power headroom at the power amplifier. The power headroom can, for example, be a power equalization headroom for power equalization through differentiated power amplifier input power per antenna port, per frequency segment.

At block 310 of the method 300, determine allocation of power amplifiers and antenna ports based on power headroom, modulation and coding, channel bandwidth. Allocate based on UL throughput.

At block 312 of the method 300, configure switching so that power amplifiers and antenna ports are used as allocated.

It will be appreciated that the preceding examples disclose user equipment module 60 for coupling to an antenna 40 comprising: an antenna port, a power amplifier 22, a transmission input port coupled to the power amplifier 22; a set of transmitter paths 37 (routes) from the power amplifier 22 to the antenna port, wherein each transmitter path 37 (route) is associated with at least a frequency segment selective filter; switching means 36 for selecting one transmission path 37 (route) in the set of transmitter paths 37 (routes).

There is a set of reception routes from the antenna port, to respective reception output ports, wherein each reception route is associated with one frequency segment in the set of frequency segments, and each reception route comprises at least a frequency segment selective filter for the associated frequency segment. There are means for coupling multiple reception routes simultaneously to an antenna.

It will be appreciated that the preceding examples disclose a module 60, associated with a set of frequency segments 52, for coupling to an antenna 40, comprising: a first antenna port, a second antenna port, a first power amplifier 22, a first transmission input port coupled to the power amplifier 22, a second power amplifier 22, a second transmission input port coupled to the power amplifier 22; a first set of transmitter paths 37 (routes) from the first power amplifier 22 to at least the first antenna port , wherein each transmitter path 37 (route) in the first set is associated with one frequency segment 52 in a set 50 of frequency segments 52, and each transmitter path 37 (route) comprises at least a frequency segment selective filter for the associated frequency segment 52; a second set of transmitter paths 37 (routes) from the second power amplifier 22 to at least the second antenna port , wherein each transmitter path 37 (route) in the second set is associated with one frequency segment 52 in a set 50 of frequency segments 52, and each transmitter path 37 (route) comprises at least a frequency segment selective filter for the associated frequency segment 52; switching means configured to independently couple one or no transmitter path in the first set of transmitter paths between the first power amplifier 22 and the first antenna port and one or no transmitter path in the second set of transmitter paths between the first power amplifier 22 and the second antenna port.

The module 60 has a set of reception routes from the first antenna port to one or more first reception output ports and from the second antenna port to one or more second reception output ports. Each reception route is associated with one frequency segment in the set of frequency segments, and each reception route comprises at least a frequency segment selective filter for the associated frequency segment. There are means for coupling multiple reception routes simultaneously to an antenna.

Multiple modules can share one or more antennas.

FIG. 14 illustrates an example of a controller 400 suitable for use in an apparatus 10. Implementation of a controller 400 may be as controller circuitry. The controller 400 may be implemented in hardware alone, have certain aspects in software including firmware alone or can be a combination of hardware and software (including firmware).

As illustrated in FIG. 14 the controller 400 may be implemented using instructions that enable hardware functionality, for example, by using executable instructions 406 in a general-purpose or special-purpose processor 402 that may be stored on a machine readable storage medium (disk, memory etc.) to be executed by such a processor 402.

The processor 402 is configured to read from and write to the memory 404. The processor 402 may also comprise an output interface via which data and/or commands are output by the processor 402 and an input interface via which data and/or commands are input to the processor 402.

The memory 404 stores instructions, program, or code 406 that controls the operation of the apparatus 10 when loaded into the processor 402. The computer program instructions, program or code am 406, provide the logic and routines that enables the apparatus 10 to perform the methods illustrated in the accompanying FIGs. The processor 402 by reading the memory 404 is configured to load and execute the instructions, program, or code 406.

The user equipment apparatus 10 comprises:

at least one processor 402; and
at least one memory 404 storing instructions that, when executed by the at least one processor 402, cause the apparatus at least to:
enable user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

As illustrated in FIG. 15, the instructions, program, or code 406 may arrive at the apparatus 10 via any suitable delivery mechanism 408. The delivery mechanism 408 may be, for example, a machine readable medium, a computer-readable medium, a non-transitory computer-readable storage medium, a computer program product, a memory device, a record medium such as a Compact Disc Read-Only Memory (CD-ROM) or a Digital Versatile Disc (DVD) or a solid-state memory, an article of manufacture that comprises or tangibly embodies the computer program 406. The delivery mechanism may be a signal configured to reliably transfer the computer program 406. The apparatus 10 may propagate or transmit the computer program 406 as a computer data signal.

The term "non-transitory" as used herein, is a limitation of the medium itself (i.e., tangible, not a signal ) as opposed to a limitation on data storage persistency (e.g., RAM vs. ROM).

Computer program instructions for causing a user equipment apparatus 10 to perform at least the following or for performing at least the following:

enabling user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

The computer program instructions may be comprised in a computer program, a non-transitory computer readable medium, a computer program product, a machine readable medium. In some but not necessarily all examples, the computer program instructions may be distributed over more than one computer program.

Although the memory 404 is illustrated as a single component/circuitry it may be implemented as one or more separate components/circuitry some or all of which may be integrated/removable and/or may provide permanent/semi-permanent/ dynamic/cached storage.

Although the processor 402 is illustrated as a single component/circuitry it may be implemented as one or more separate components/circuitry some or all of which may be integrated/removable. The processor 402 may be a single core or multi-core processor.

References to 'computer-readable storage medium', 'computer program product', 'tangibly embodied computer program' etc. or a 'controller', 'computer', 'processor' etc. should be understood to encompass not only computers having different architectures such as single /multi-processor architectures and sequential (Von Neumann)/parallel architectures but also specialized circuits such as field-programmable gate arrays (FPGA), application specific circuits (ASIC), signal processing devices and other processing circuitry. References to computer program, instructions, code etc. should be understood to encompass software for a programmable processor or firmware such as, for example, the programmable content of a hardware device whether instructions for a processor, or configuration settings for a fixed-function device, gate array or programmable logic device etc.

As used in this application, the term 'circuitry' may refer to one or more or all the following:

(a) hardware-only circuitry implementations (such as implementations in only analog and/or digital circuitry) and
(b) combinations of hardware circuits and software, such as (as applicable):

i. a combination of analog and/or digital hardware circuit(s) with software/firmware and
ii. any portions of hardware processor(s) with software (including digital signal processor(s)), software, and memory or memories that work together to cause an apparatus, such as a mobile phone or server, to perform various functions and

(c) hardware circuit(s) and or processor(s), such as a microprocessor(s) or a portion of a microprocessor(s), that requires software (for example, firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor and its (or their) accompanying software and/or firmware. The term circuitry also covers, for example and if applicable to the claim element, a baseband integrated circuit for a mobile device or a similar integrated circuit in a server, a cellular network device, or other computing or network device.

The blocks illustrated in the accompanying Figs may represent steps in a method and/or sections of code in the computer program 406. The illustration of a particular order to the blocks does not necessarily imply that there is a required or preferred order for the blocks and the order and arrangement of the block may be varied. Furthermore, it may be possible for some blocks to be omitted.

As used here 'module' refers to a unit or apparatus that excludes certain parts/components that would be added by an end manufacturer or a user. The apparatus 10 can, for example be a module. A controller 400 of the apparatus 10 can, for example be a module.

Where a structural feature has been described, it may be replaced by means for performing one or more of the functions of the structural feature whether that function or those functions are explicitly or implicitly described.

The above-described examples find application as enabling components of:
automotive systems; telecommunication systems; electronic systems including consumer electronic products; distributed computing systems; media systems for generating or rendering media content including audio, visual and audio visual content and mixed, mediated, virtual and/or augmented reality; personal systems including personal health systems or personal fitness systems; navigation systems; user interfaces also known as human machine interfaces; networks including cellular, non-cellular, and optical networks; ad-hoc networks; the internet; the internet of things; virtualized networks; and related software and services.

The apparatus can be provided in an electronic device, for example, a mobile terminal, according to an example of the present disclosure. It should be understood, however, that a mobile terminal is merely illustrative of an electronic device that would benefit from examples of implementations of the present disclosure and, therefore, should not be taken to limit the scope of the present disclosure to the same. While in certain implementation examples, the apparatus can be provided in a mobile terminal, other types of electronic devices, such as, but not limited to: mobile communication devices, hand portable electronic devices, wearable computing devices, portable digital assistants (PDAs), pagers, mobile computers, desktop computers, televisions, gaming devices, laptop computers, cameras, video recorders, GPS devices and other types of electronic systems, can readily employ examples of the present disclosure. Furthermore, devices can readily employ examples of the present disclosure regardless of their intent to provide mobility. The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to 'comprising only one...' or by using 'consisting.'

In this description, the wording 'connect', 'couple' and 'communication' and their derivatives mean operationally connected/coupled/in communication. It should be appreciated that any number or combination of intervening components can exist (including no intervening components), i.e., to provide direct or indirect connection/coupling/communication. Any such intervening components can include hardware and/or software components.

As used herein, the term "determine/determining" (and grammatical variants thereof) can include, not least: calculating, computing, processing, deriving, measuring, investigating, identifying, looking up (for example, looking up in a table, a database, or another data structure), ascertaining and the like. Also, "determining" can include receiving (for example, receiving information), accessing (for example, accessing data in a memory), obtaining and the like. Also, " determine/determining" can include resolving, selecting, choosing, establishing, and the like.

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can', or 'may' refers to a particular instance in a class of examples. A property of the instance can be a property of only that instance or a property of the class or a property of a sub-class of the class that includes some but not all the instances in the class. It is therefore implicitly disclosed that a feature described with reference to one example but not with reference to another example, can where possible be used in that other example as part of a working combination but does not necessarily have to be used in that other example.

As used herein, "at least one of the following: " and "at least one of " and similar wording, where the list of two or more elements are joined by "and" or "or" mean at least any one of the elements, or at least any two or more of the elements, or at least all the elements.

Although examples have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

The description of a feature, such as an apparatus or a component of an apparatus, configured to perform a function, or for performing a function, should additionally be considered to also disclose a method of performing that function. For example, description of an apparatus configured to perform one or more actions, or for performing one or more actions, should additionally be considered to disclose a method of performing those one or more actions with or without the apparatus.

Although features have been described with reference to certain examples, those features may also be present in other examples whether described or not.

The term 'a', 'an' or 'the' is used in this document with an inclusive not an exclusive meaning. That is any reference to X comprising a/an/the Y indicates that X may comprise only one Y or may comprise more than one Y unless the context clearly indicates the contrary. If it is intended to use 'a', 'an' or 'the' with an exclusive meaning then it will be made clear in the context. In some circumstances the use of 'at least one' or 'one or more' may be used to emphasis an inclusive meaning but the absence of these terms should not be taken to infer any exclusive meaning. The presence of a feature (or combination of features) in a claim is a reference to that feature or (combination of features) itself and to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

The above description describes some examples of the present disclosure however those of ordinary skill in the art will be aware of possible alternative structures and method features which offer equivalent functionality to the specific examples of such structures and features described herein above and which for the sake of brevity and clarity have been omitted from the above description. Nonetheless, the above description should be read as implicitly including reference to such alternative structures and method features which provide equivalent functionality unless such alternative structures or method features are explicitly excluded in the above description of the examples of the present disclosure.

Whilst endeavoring in the foregoing specification to draw attention to those features believed to be of importance the Applicant may seek protection via the claims in respect of any patentable feature or combination of features hereinbefore referred to and/or shown in the drawings whether or not emphasis has been placed thereon.

**Claims**

1. A user equipment comprising means for:
   enabling user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

2. A user equipment as claimed in claim 1, wherein the multiple radio networks use different frequency segments.

3. A user equipment as claimed in claim 1 or 2, wherein the multiple radio networks use the same cellular radio access technology and different operators or use different radio access technology.

4. A user equipment as claimed in any preceding claim comprising: means for measuring downlink received signal strength per antenna, per frequency segment, per network;
   wherein allocation of antennas to multiple radio networks for simultaneous transmissions via the antennas to the multiple radio networks, comprises simultaneous allocation of uplink frequency segments to antennas for simultaneous uplink transmissions via the antennas using the allocated uplink frequency segments, based on measured downlink received signal strength per antenna, per frequency segment, per network.

5. A user equipment as claimed in any preceding claim, wherein allocation of antennas to multiple radio networks for simultaneous transmissions via the antennas to the multiple radio networks, comprises selecting a frequency segment for an antenna from a set of frequency segments associated with that antenna.

6. A user equipment as claimed in any preceding claim, wherein the allocation of antennas to multiple radio networks for simultaneous transmissions via the antennas to the multiple radio networks is based on an estimation of throughput associated with the simultaneous allocation of different combinations of uplink frequency segments to antennas for simultaneous uplink transmissions via the antennas.

7. A user equipment as claimed in any preceding claim, wherein the allocation of antennas to multiple radio networks for simultaneous transmissions via the antennas to the multiple radio networks is based on optimization, optionally with constraints, of a cost function based on per frequency segment, per antenna throughput.

8. A user equipment as claimed in any preceding claim, wherein the allocation of antennas to multiple radio networks for simultaneous transmissions via the antennas to the multiple radio networks is based on available power headroom for the allowed combinations of uplink frequency segments and antennas.

9. A user equipment as claimed in any preceding claim, wherein the allocation of antennas to multiple radio networks for simultaneous transmissions via the antennas to the multiple radio networks is based on available modulation for the allowed combinations of uplink frequency segments and antennas.

10. A user equipment as claimed in any preceding claim, wherein the allocation of antennas to multiple radio networks for simultaneous transmissions via the antennas to the multiple radio networks is configured to control an order of uplink multiple-input multiple output (MIMO), that is a number of simultaneous uplink MIMO streams, wherein each stream is associated with a different antenna.

11. A user equipment as claimed in any preceding claim, wherein the allocation of antennas to multiple radio networks for simultaneous transmissions via the antennas to the multiple radio networks is configured to minimize a difference in power imbalance across the simultaneous uplink MIMO streams.

12. A user equipment as claimed in any preceding claim, wherein the user equipment is configured to perform individual transmission power adjustment for the individual MIMO streams.

13. A user equipment as claimed in any preceding claim, comprising a set of power amplifiers, wherein each power amplifier in the set of power amplifiers is associated with a respective antenna and a set of frequency segments for the antenna, wherein there is a different selectable route from the power amplifier to the antenna for each of a plurality of frequency segments in an associated set of frequency segments associated with the radio network.

14. A user equipment as claimed in any preceding claim, comprising antennas, wherein at least one antenna is usable by either of two or more power amplifiers.

15. A method comprising:
user-equipment controlled allocation of antennas to multiple radio networks for simultaneous transmissions via the antennas to the multiple radio networks, wherein the allocation is based on at least measurements of signals received at at least some of the antennas for at least one of the multiple radio networks, wherein the allocation of antennas to multiple radio networks is determined autonomously by the user equipment not by a radio network.

FIG. 1

FIG. 2

RN i   PA j

20_ij

22_ij

24_ij

FIG. 3

RN 1   PA 1

20_11   22_11

37

ANT 1

40_1

RN 2   PA 1

20_21   22_21

30

RN i   PA 1

20_i1   22_i1

FIG. 4A

22_12

RN 1   PA 2

20_12

37

ANT 2

40_2

RN 2   PA 2

20_22   22_22

RN i   PA 2

20_i2   22_i2

30

FIG. 4B

50_11

52

RN 1   PA 1

20_11   22_11

37_11

52

ANT 1

40_1

50_21

52

RN 2   PA 1

20_21   22_21

37_21

30

RN i   PA 1

20_i1   22_i1

FIG. 5A

50_12   37_12   52

20_12   22_12

RN 1   PA 2

20_22   22_22

52

ANT 2

40_2

RN 2   PA 2

52

20_i2   22_i2

50_22

RN i   PA 2

37_22   30

FIG. 5B

FIG. 6

FIG. 7

VARIABLE ORDER MIMO

FIG. 8

FIG. 9

FIG. 10

FIG. 11

300

**Start**

Determine active antennas and list all supported frequency segments at the antennas and the power amplifier that connects to the antenna port

302

Determine the modulation and coding including channel bandwidth for data of each frequency segment supported and in use/configurable at each antenna port

304

Measure at each antenna port for each frequency segment a received signal power that associates propagation loss to the elements of the former two steps

306

Determine for each received signal power (antenna port, freq segment) a corresponding power headroom at each PA for power equalization through differentiated PA input power (antenna port, freq segment)

308

- Determine for each antenna port for each mapped PA (uplink) if power headroom allows favor of additional transmission of a same frequency segment, or of a different frequency segment.
- The comparison must consider modulation and coding including channel bandwidth

310

Configure each antenna port for the highest throughput uplink configuration as determined in the above steps

312

**End**

FIG. 13

500

502

504

506

FIG 12

400

Processor          402

Memory
406          404

FIG 14

406          408

FIG 15

EP 4 687 304 A1

# EUROPEAN SEARCH REPORT

**Application Number**

EP 25 18 0122

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/035396 A1 (GOOGLE LLC [US]) 15 February 2024 (2024-02-15) * paragraphs [3.7.8.10.16.16.20] - [31.36.37]; figures 1-5 * | 1-15 | INV. H04B7/0404 H04B7/06 H04B7/08 |
| | ----- | | |
| X | US 2023/397024 A1 (ASHIWAL VIJENDRAKUMAR K [US] ET AL) 7 December 2023 (2023-12-07) * paragraphs [0112] - [113.125]; claim 1; figures 6-7 * | 1-13,15 | |
| | ----- | | |

**TECHNICAL FIELDS SEARCHED (IPC)**

H04B

The present search report has been drawn up for all claims

| Place of search | Date of completion of the search | Examiner |
|---|---|---|
| Munich | 17 November 2025 | Ganis, Alexander |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
...................................................................................................
& : member of the same patent family, corresponding
     document

EPO FORM 1503 03.82 (P04C01)

27

## ANNEX TO THE EUROPEAN SEARCH REPORT
## ON EUROPEAN PATENT APPLICATION NO.

EP 25 18 0122

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2025

| Patent document cited in search report | Publication date | Patent family member(s) | | Publication date |
|---|---|---|---|---|
| WO 2024035396 A1 | 15-02-2024 | TW | 202408175 A | 16-02-2024 |
| | | WO | 2024035396 A1 | 15-02-2024 |
| US 2023397024 A1 | 07-12-2023 | NONE | | |

EPO FORM P0459

For more details about this annex : see Official Journal of the European Patent Office, No. 12/82